# EUROPEAN PATENT SPECIFICATION

(11) **EP 2 984 212 B1**
(45) Date of publication and mention of the grant of the patent: **18.12.2019**
(21) Application number: 14717850.3
(22) Date of filing: 14.04.2014
(51) Int. Cl.: C25D 17/00, C25D 5/02, C25D 5/08, C25D 7/04, C25D 7/10, C25D 17/06, F16C 33/14

(54) **ELECTROPLATING RACK**
ELEKTROPLATTIERUNGSGESTELL
RÂTELIER D'ÉLECTRODÉPOSITION

(30) Priority: 12.04.2013 GB 201306710
(43) Date of publication of application: 17.02.2016
(73) Proprietor: Mahle International GmbH, 70376 Stuttgart (DE); Mahle Engine Systems UK Limited, Rugby, Warwickshire CV23 0WE (GB)
(72) Inventor: FORDER, Jon, Rugby Warwickshire CV21 2QT (GB); CAREY, John, Corby Northamptonshire NN18 8JP (GB)
(74) Representative: BRP Renaud & Partner mbB Rechtsanwälte Patentanwälte Steuerberater
(86) International application number: PCT/GB2014/051166
(87) International publication number: WO 2014/167366

(56) References cited:
- BR-A- 9 204 745
- US-A- 2 500 205
- US-A- 2 944 945
- US-A- 3 065 153
- US-A- 3 331 764
- US-A- 4 399 019

## Description

The present invention relates to an electroplating rack and electroplating bath for use in electroplating the concave surfaces of hollow cylindrical and part-cylindrical sliding bearing lining shells, and in particular half bearing shells and plain bushes.

### BACKGROUND

Half bearing lining shells are commonly used in crankshaft journal bearings of internal combustion engines, are substantially semi-cylindrical in shape, and may be provided with one or more generally semi-annular thrust flanges at the axial ends of the bearing shell before being assembled into the bearing of an engine. Plain bushes are hollow cylindrical bearing linings. In use, a pair of half bearing lining shells, or a plain bush, are used to support the journal of a shaft (e.g. a rotatable engine crankshaft).

The concave bearing surfaces of sliding bearings generally have a layered construction. The layered construction frequently comprises: a strong backing material, for example steel, of a thickness in the region of about 1 mm or more; a layer of a first bearing material (the "lining layer"), for example a copper-based material (e.g. bronze) or aluminium-based material, which is adhered to the backing and of a thickness generally in the range from about 0.1 to 0.5 mm (e.g. 300 µm of copper-based alloy of 8 %wt Sn, 1 %wt Ni, and balance of Cu, apart from incidentally impurities); and, a layer of a second bearing material (the "overlay layer") of a metallic or polymer-based bearing material adhered to the surface of the lining layer.

Such metallic layers are commonly deposited by electroplating coatings, in which a plurality of half bearing shells are held on a frame-like plating rack, before being immersed in a bath of electroplating solution (electrolyte). The plating rack has an electrically insulating front plate with an elongate slot running along its length, and the half bearing shells are loaded along the length of the insulating plate, by standing their circumferential end faces (parting faces) onto the insulating plate, equally spaced to either side of the slot, before being clamped into place by a bearing clamping mechanism. Such a plating rack is disclosed in US3779890, and a related rack for a single bearing shell is disclosed in US2500206.

Further an electroplating rack for holding a plurality of sliding bearing shells whilst a coating is electroplated onto their concave inner surfaces, comprising an end bracket, wherein the end bracket comprises a liquid supply conduit for receiving a flow of liquid into the plating rack along the concave inner faces of the bearing shells is disclosed by BR 9 204 745 A and US 3 065 153 A.

Also US 2 500 205 A discloses a method of electroplating a layer of metal or metallic alloy onto the concave surface of semi cylindrical articles and to maintaining a sufficiently uniform thickness of deposited metal.

US 4 399 019 A discloses an electroplating cell for high current density electroplating. The cell includes an anode structure for holding a source of plating metal and an anode electrical conductor for supplying a positive electrical potential to the anode structure. At least one agitating vane is disposed adjacent the anode structure which is rotated around the anode structure by a rotating means. A locating means fixes the physical relationship of workpieces to be electroplated with the anode structure. A cathode electrical conductor supplies a negative electrical potential to the workpieces.

When submerged in the electroplating solution, the bearing shells are electrically connected as a cathode, and at least one elongate anode is provided parallel to, and spaced apart from, the elongate slot, most or all of which is submerged in the plating solution. An electric field is provided between the anode and the cathodic bearing shells, with the electric field established in the plating solution and passing through the elongate slot, such that the elongate slot may be regarded as a virtual anode, that is substantially at an equipotential along its submerged length, apart from at the ends. The bearing shells are aligned on the insulating plate symmetrically with their semicircular axial edges in abutment, with the bearing shells being curved about a common axis of curvature, which is approximately collinear with the centre-line of the elongate slot, which provides an electric field that is substantially uniform across their concave inner surfaces to facilitate a uniform electroplating deposition rate.

At high current densities, the rate at which electroplating ions are deposited is limited by the rate at which the ions are replenished in the electroplating solution adjacent the deposition surface. To enhance the rate of replenishment against the plating surface, it is known to agitate the electroplating solution or to cause relative movement of the bearing shells and the solution. A uniform rate of replenishment is required to all parts of the concave inner surface of the bearing shells to avoid inhomogeneous rates of deposition on the surface. However, known approaches provide only a limited and/or inhomogeneous enhancement of the replenishment of the solution against the plating surface. In one approach, a plurality of plating racks are each suspended from a carousel-like mechanism, and drawn around within a large tank of solution: such an arrangement has a large footprint, requires a large volume of solution, and is expensive. In another approach, a plating rack is rotated about the axis of the sliding bearings. In further approaches, the solution in the bath is agitated around the plating rack by pumping the solution to cause circulation, or by bubbling gas through the solution. In a yet further approach, the plating rack is moved axially through a few centimetres with a reciprocating motion.

### SUMMARY OF THE DISCLOSURE

According to the present invention there is provided
an electroplating rack for holding a plurality of sliding bearing shells whilst a coating is electroplated onto their concave inner surfaces, comprising
an end bracket,
wherein the end bracket comprises a liquid supply conduit for receiving a flow of liquid into the plating rack along the concave inner faces of the bearing shells.

According to a second aspect of the present invention, there is provided
an electroplating bath for receiving an electroplating rack according to the first aspect, comprising
a bath for containing electroplating solution and having a liquid supply outlet configured to mate with the liquid supply conduit of the rack, and
a pump configured to pump electroplating solution out through the liquid supply outlet.

Advantageously, the liquid supply conduit enables a complete exchange of the electroplating solution within the plating rack, as fresh electroplating solution enters through the end bracket, flows generally axially along the concave inner faces of the bearing shells, and exits through the elongate slot. This may enable an enhanced replenishment rate, and so enable an enhanced rate of deposition. Further, the liquid supply conduit may enable an enhanced uniformity of replenishment compared with known methods.

The liquid inlet may comprise a coupling pipe that projects from the end bracket, for docking with a liquid supply outlet of an electroplating bath. Advantageously the coupling pipe enables the plating rack to be conveniently engaged with a supply of electroplating solution, by engaging with a corresponding supply outlet in the electroplating bath.

The coupling pipe has a terminal region with an open end and the terminal region may have an external profile that tapers down in width towards the open end. Advantageously a coupling pipe having a tapered profile can form a good fluid connection with a correspondingly tapered feature within the supply outlet, and facilitates alignment of the coupling pipe when it is received into the supply outlet.

The end bracket comprises an internal face perpendicular to the elongate slot, and the liquid supply conduit has an internal port that is level with the internal face. Advantageously, an abrupt end to the liquid supply conduit induces turbulent flow in the electroplating solution entering into the plating rack, preventing the formation of a vorticular flow (i.e. a screw-like flow) at the inlet, which could establish an inhomogeneous pattern of replenishment of plating solution across the deposition surface, producing inhomogeneous deposition rates. Further, the abrupt inner end of the liquid supply conduit enhances mixing of the electroplating solution within the plating rack.

The rack may comprise a bearing clamping mechanism configured to clamp a stack of bearing shells against the end bracket, with the axial edges of adjacent bearing shells in abutment.

The electroplating rack may comprise an electrically insulating plate having an elongate slot extending along the plate, wherein the rack is configured to hold a plurality of hollow semi-cylindrical sliding bearing shells symmetrically arrayed along the insulating plate with circumferential end faces of each bearing shell contacting the insulating plate on opposite sides of the elongate slot, wherein the liquid supply conduit is configured for receiving a flow of liquid into the plating rack between concave inner faces of the bearing shells and the insulating plate. Advantageously, this arrangement enables a rapid and relatively uniform replenishment of the solution adjacent the plating surface, as the plating solution exits the plating rack through the elongate slot.

The electroplating rack may be configured to hold a plurality of substantially cylindrical sliding bearing shells axially arrayed along the rack, wherein the end section is connected to a further end section, and the further end section comprises a liquid overflow aperture for receiving a flow of liquid out of the plating rack. Advantageously, this arrangement enables a rapid and relatively uniform replenishment of the solution adjacent the plating surface, with the plating solution exiting through the upper end of the stack of cylindrical bearing shells.

The electroplating bath may comprise a support for supporting the plating rack, which comprises a rack clamp, for clamping the liquid supply conduit into the liquid supply outlet. Advantageously, the provision of the rack clamp enables a higher pressure liquid supply to be connected to the liquid supply conduit, without the plating rack becoming detached from the liquid supply outlet.

The electroplating bath may comprise a plating rack according to the first aspect.

### BRIEF DESCRIPTION OF THE DRAWINGS

Embodiments of the invention are further described hereinafter with reference to the accompanying drawings, in which:
- Figure 1A shows a plating rack according to the present invention, for use in electroplating half bearing shells;
- Figure 1B shows an enlarged view of an end of the plating rack of Figure 1A;
- Figure 1C shows a cross-sectional view of the plating rack of Figure 1A in use;
- Figures 2A and 2B show schematic front and side views of the plating bath according to the present invention;
- Figure 2C shows the top of a plating bath according to the present invention;
- Figure 2D shows a view down into the bottom of the bath of Figure 2C, when empty of electroplating solution; and
- Figure 3 shows a plating rack according to the present invention, for use in electroplating plain bushes.

### DETAILED DESCRIPTION

Like reference numerals refer to like elements throughout.

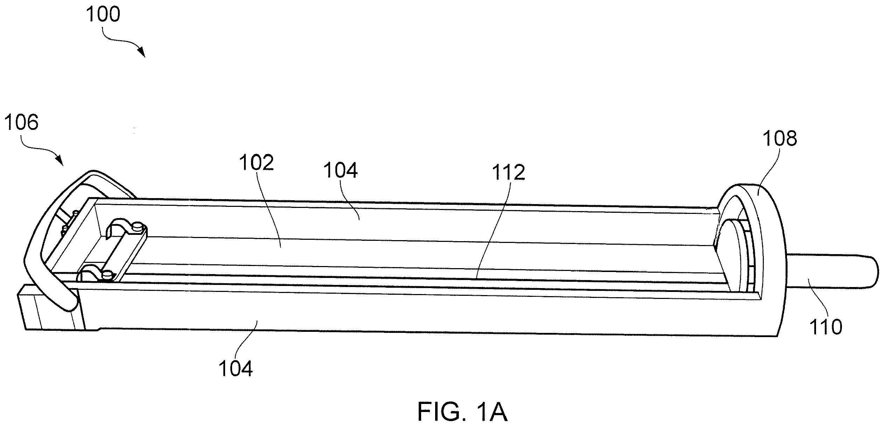

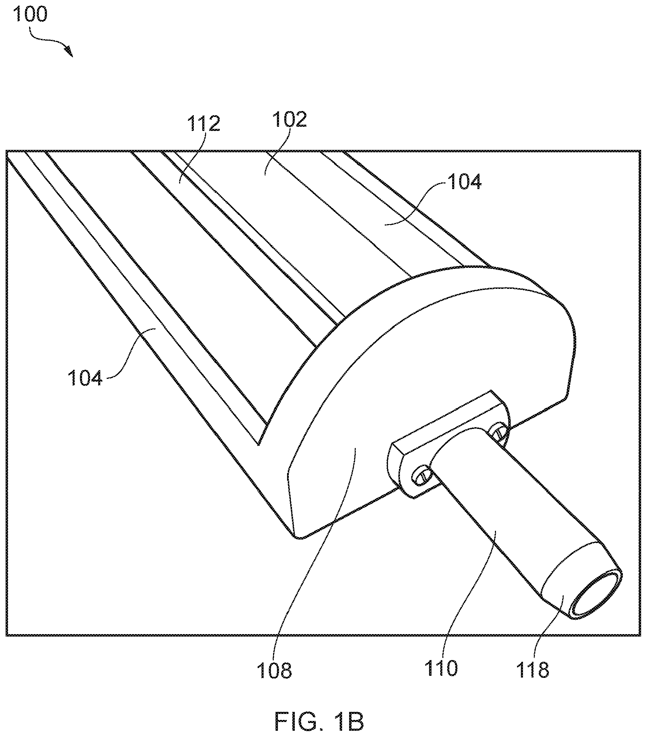

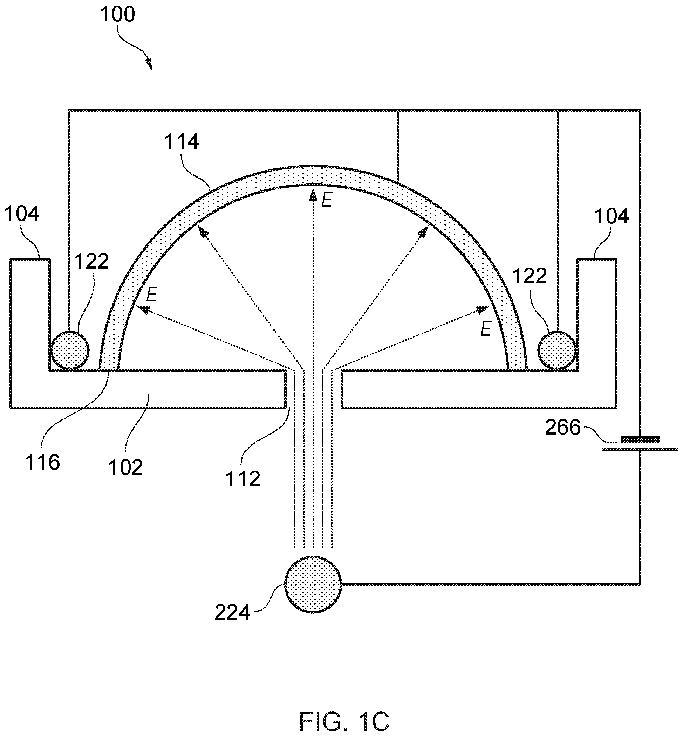

Figure 1A shows a plating rack according to the present invention, Figure 1B shows an enlarged view of the lower end section, and Figure 1C shows a cross-sectional view of the plating rack in use perpendicular to the elongate slot.

The plating rack 100 comprises an electrically insulating front plate 102, sides 104, an upper end section, a bearing clamping mechanism 106 at the upper end, a semicircular lower end section 108, and a coupling pipe 110 (e.g. liquid supply conduit). The insulating plate 102 has an elongate slot 112 running centrally along its length.

In use, semi-cylindrical bearing shells 114 are loaded along the length of the plating rack 100, with their circumferential end faces 116 contacting the front plate 102, symmetrically arranged on either side of the elongate slot 112, and between the sides 104. The stack of bearing shells 114 is held in place on the rack 100 with the bearing clamping mechanism 106, which clamps the bearing shells against the lower end section 108, and provides electrical contact to the stack of bearing shells. Once loaded, the plating rack 100 is lowered into an electroplating bath to submerge the bearing shells in electroplating solution, and the stack of bearing shells 114 are electrically connected as a cathode.

The coupling pipe 110 projects from the end section 108, and in use is coupled to a supply of plating solution (e.g. a solution of tin ions), which flows into the interior of the plating rack 100. The coupling pipe 110 is close to the common axis of the bearing shells 114 and the elongate slot 112, so that plating solution flowing into the plating rack 100 through the coupling pipe is away from the surface of the bearing shells and induces a generally axial flow within the plating rack. The end 118 of the coupling pipe 110 furthest from the end section 108 is conically tapered (i.e. reducing in width towards the open end), to facilitate connection of a supply pipe. On the inner surface of the end section 108, the coupling pipe ends abruptly, such that plating solution flowing into the plating rack 100 induces turbulence in the solution within the plating rack. The turbulence prevents a stable flow pattern in the solution within the plating rack (e.g. a vorticular flow) which could cause inhomogeneous replenishment, and also enhances mixing of the electroplating solution within the plating rack. As fresh electroplating solution flows into the plating rack 100 through the coupling pipe 110, displaced solution flows out of the plating rack through the elongate slot 112.

The clamped stack of bearing shells 114 are electrically biased as a cathode, and electrodes 122 (sometimes known as "robber electrodes" or "thieving electrodes") are provided behind the bearing shells, also with a negative bias. The robber electrodes 122 prevent, or substantially reduce, unwanted deposition of ions onto the convex outer surface of the bearing shells 114. An anode 224 is provided in front of, and spaced apart from, the elongate slot 112, and as the electric field is channelled through the elongate slot 112, a substantially equal electric field arises across the inner concave surface of the bearing shells 114.

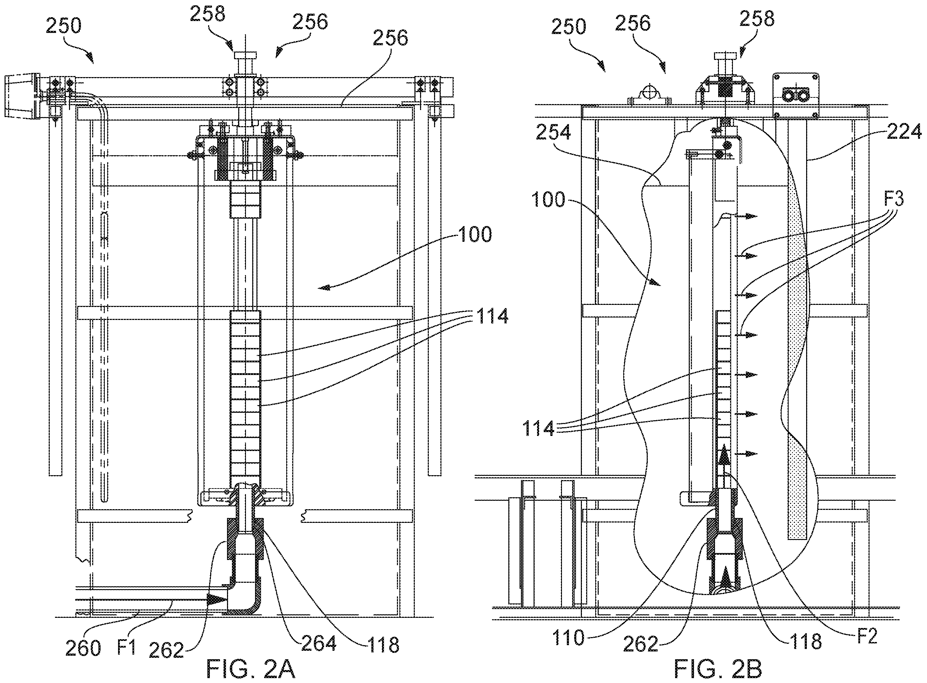

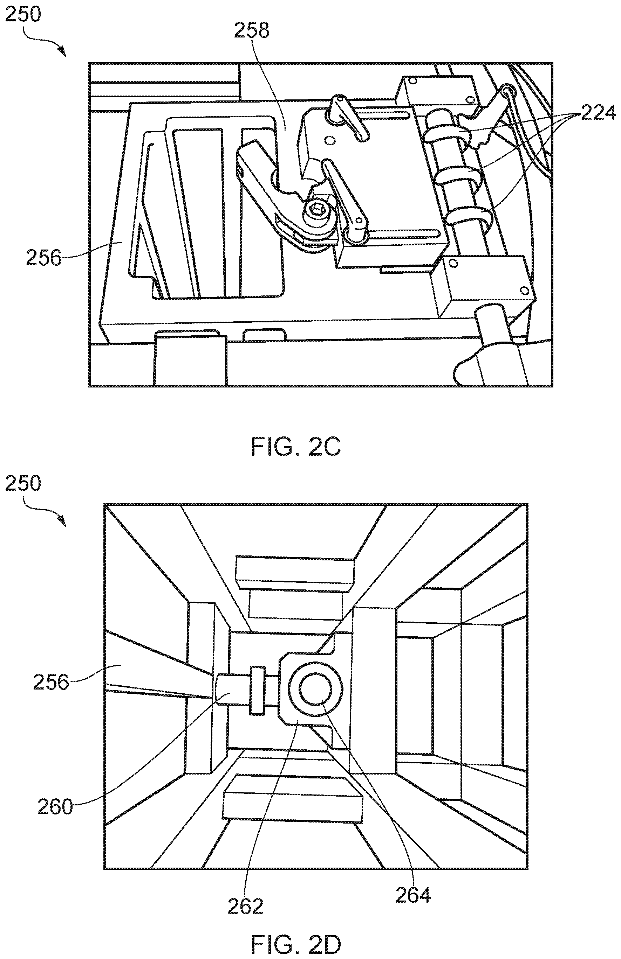

Figures 2A and 2B schematically illustrate front and side views of an electroplating bath 250 into which an electroplating rack 100 has been received; Figure 2C shows the top of such an electroplating plating bath, and Figure 2D shows a view down into the bottom of the bath, when empty of electroplating solution.

The bath 250 comprises an open topped vessel 252 for receiving electroplating solution (electrolyte) 254, a frame 256 for supporting the electroplating rack 100 and incorporating a rack clamping mechanism 258, and an anode 224 (more than one anode may be provided, as shown in Figure 2C). A pumping mechanism (not shown) collects electroplating solution 254 and delivers it through a supply pipe 260 to the supply outlet 262. The supply outlet 262 has a conically tapered opening 264 configured to form a mating fit with the tapered end 118 of the coupling pipe 110 of the plating rack 100. In use, the electroplating rack 100 is lowered into the electroplating solution 254, with the tapered end 118 of the coupling pipe 110 received into the tapered opening 264 of the supply outlet 262. The rack is supported by the frame 256, with the bearing shells 114 submerged in the electroplating solution 254, and the rack being clamped in place by the rack clamping mechanism 258. A supply F1 of electroplating solution 254 is pumped out of the supply pipe 260, into the plating rack 100 through the coupling pipe 110, generating a turbulent, generally axial flow F2 within the rack, which exits F3 through the elongate slot 112 in the insulating front plate 102.

An electrical supply 266 is connected across the anode 224 and the cathodic bearing shells 114, which generates an electrical field arrangement within the plating rack that diverges radially from the elongate slot 112 to the inner concave surface of the sliding bearings 114, with a substantially uniform electric field across the concave inner plating surface. The current density at the inner concave surface governs the deposition rate of ions from the electroplating solution, and may be set to a higher level than in prior plating racks, due to the enhanced rate of replenishment of the electroplating solution that is provided by the axial supply in through the end section 108 and coupling pipe 110.

Although the Figures 1A to 2B illustrate plating racks for use in plating semi-cylindrical sliding bearing shells, the present invention also relates to plating racks for electroplating the concave inner surfaces of hollow cylindrical sliding bearing shells (e.g. plain bushes).

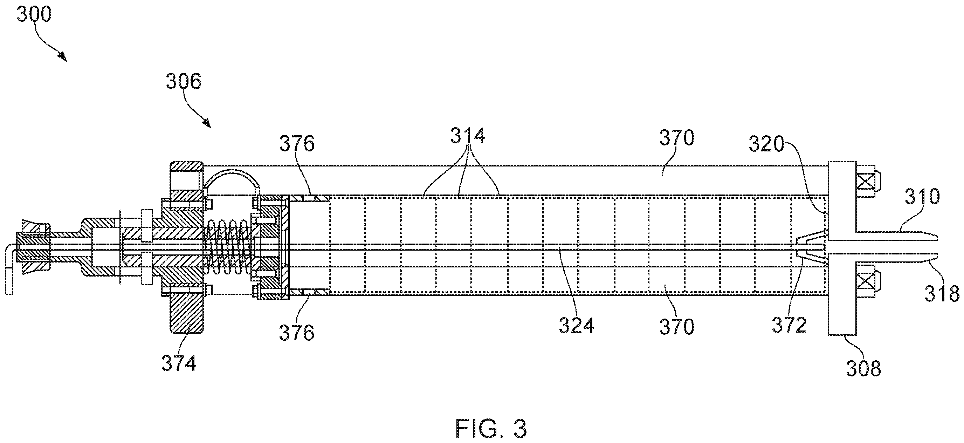

Figure 3 illustrates a plating rack 300 for use in plating a column-like stack of cylindrical bearing shells 314 aligned along a common axis, and clamped in the rack, which may be received into the electroplating bath 250 of Figures 2A to 2D. The plating rack 300 has a frame comprising an upper end section 374, a lower end section 308, and connecting rods 370 connecting between them. The plating rack also comprises a bearing clamping mechanism 306 that is connected to the upper end section 374, a central anode 324, a coupling pipe 310. In use, the stack of bearing shells 314 are clamped between the clamping mechanism 306 and the lower end section 308. The anode 324 is coaxial to the bearing shells 314, being supported at one end by the upper end section 374 and at the other end by the lower end section 308, being supported by a tripod-like frame 372 that is connected to the lower end section. A generally cylindrical cover (not shown) is also provided, which surrounds the bearing shells 314 and provides electrostatic shielding that reduces plating on the concave outer surfaces of the bearing shells, as well as protecting the bearing shells from becoming dislodged during immersion in the plating bath, and subsequent removal.

The coupling pipe 310 projects from the lower end section 308, and in use is coupled to a supply of plating solution (e.g. a solution of tin ions), which flows into the interior of the plating rack 300, within the bearing shells 314. The coupling pipe 310 is coaxial with the common axis of the bearing shells 314, so that plating solution flowing into the plating rack 300 through the coupling pipe is spaced apart from the surface of the bearing shells and induces a generally axial flow within the plating rack. The end 318 of the coupling pipe 310 furthest from the end section 308 is conically tapered (i.e. reducing in width towards the open end), to facilitate connection of a supply pipe of the plating bath. On the inner surface 320 of the end section 308, the coupling pipe ends abruptly, such that plating solution flowing into the plating rack 300 induces turbulence in the solution within the plating rack. The turbulence prevents a stable flow pattern in the solution within the plating rack (e.g. a vorticular flow) which could cause inhomogeneous replenishment, and also enhances mixing of the electroplating solution within the plating rack. As fresh electroplating solution flows into the plating rack 300 through the coupling pipe 310, displaced solution flows out of the plating rack through openings 376 in the clamping mechanism 306, above the end of the stack of bearing shells 314.

The figures provided herein are schematic and not to scale.

Throughout the description and claims of this specification, the words "comprise" and "contain" and variations of them mean "including but not limited to", and they are not intended to (and do not) exclude other moieties, additives, components, integers or steps. Throughout the description and claims of this specification, the singular encompasses the plural unless the context otherwise requires. In particular, where the indefinite article is used, the specification is to be understood as contemplating plurality as well as singularity, unless the context requires otherwise.

Features, integers, characteristics, compounds, chemical moieties or groups described in conjunction with a particular aspect, embodiment or example of the invention are to be understood to be applicable to any other aspect, embodiment or example described herein unless incompatible therewith. All of the features disclosed in this specification (including any accompanying claims, abstract and drawings), and/or all of the steps of any method or process so disclosed, may be combined in any combination, except combinations where at least some of such features and/or steps are mutually exclusive. The invention is not restricted to the details of any foregoing embodiments. The invention is as set out by the accompanying claims.

## Claims

1. An electroplating rack for holding a plurality of sliding bearing shells (114, 314) whilst a coating is electroplated onto their concave inner surfaces, comprising an end bracket (108, 308),
wherein the end bracket (108, 308) comprises a liquid supply conduit (110, 310) for receiving a flow of liquid into the plating rack (100, 300) along the concave inner faces of the bearing shells (114, 314),
**characterized in that**,
the end bracket (108, 308) comprises an internal face (320), and the liquid supply conduit (110, 310) has an internal port that is level with the internal face (320).

2. An electroplating rack according to claim 1, wherein the liquid supply conduit (110, 310) comprises a coupling pipe (110, 310) that projects from the end bracket (108, 308), for docking with a liquid supply outlet (262) of an electroplating bath (250).

3. An electroplating rack according to claim 2, wherein the coupling pipe (110, 310) has a terminal region (118, 318) with an open end and the terminal region (118, 318) has an external profile that tapers down in width towards the open end.

4. An electroplating rack according to any preceding claim, wherein the rack (100, 300) comprises a bearing clamping mechanism (106, 306) configured to clamp a stack of bearing shells (114, 314) against the end bracket (108, 308), with axial edges of adjacent bearing shells (114, 314) in abutment.

5. An electroplating rack according to any preceding claim, wherein the rack (100) comprises an electrically insulating plate (102) having an elongate slot (112) extending along the plate(102), wherein the rack (100) is configured to hold a plurality of hollow semi-cylindrical sliding bearing shells (114) symmetrically arrayed along the insulating plate (102) with circumferential end faces (116) of each bearing shell contacting the insulating plate (102) on opposite sides of the elongate slot (112), and wherein the liquid supply conduit (110) is configured for receiving a flow of liquid into the plating rack (100) between concave inner faces of the bearing shells (114) and the insulating plate (102).

6. An electroplating rack according to any one of claims 1 to 4, wherein the electroplating rack (300) is configured to hold a plurality of substantially cylindrical sliding bearing shells (314) axially arrayed along the rack (300), wherein the end section (308) is connected to a further end section (374), and the further end section (374) comprises a liquid overflow aperture for receiving a flow of liquid out of the plating rack (300).

7. An electroplating bath comprising an electroplating rack (100, 300) according to any preceding claim, comprising
a bath (250) for containing electroplating solution (254) and having a liquid supply outlet (262) configured to mate with the liquid supply conduit (110, 310) of the rack (100, 300), and
a pump configured to pump electroplating solution (254) out through the liquid supply outlet (262).

8. An electroplating bath according to claim 7, wherein the electroplating bath (250) comprises a support (256) for supporting the plating rack (100, 300), which comprises a rack clamp (258), for clamping the liquid supply conduit (110, 310) into the liquid supply outlet (262).

## Patentansprüche

1. Galvanisierungsgestell zum Halten einer Vielzahl von Gleitlagerschalen (114, 314), während eine Beschichtung auf ihre konkaven inneren Oberflächen galvanisiert wird, das einen Endträger (108, 308) umfasst,
wobei der Endträger (108, 308) eine Flüssigkeitsversorgungsleitung (110, 310) zum Empfangen eines Flüssigkeitsflusses in das Galvanisierungsgestell (100, 300) entlang der konkaven Innenflächen der Lagerschalen (114, 314) umfasst,
**dadurch gekennzeichnet, dass**
der Endträger (108, 308) eine Innenfläche (320) umfasst, und die Flüssigkeitsversorgungsleitung (110, 310) einen Innenport aufweist, der mit der Innenfläche (320) bündig ist.

2. Galvanisierungsgestell nach Anspruch 1, wobei die Flüssigkeitsversorgungsleitung (110, 310) ein Kopplungsrohr (110, 310) umfasst, das von dem Endträger (108, 308) zum Andocken an einen Flüssigkeitsversorgungsauslass (262) eines galvanischen Bads (250) vorragt.

3. Galvanisierungsgestell nach Anspruch 2, wobei das Kopplungsrohr (110, 310) einen Abschlussbereich (118, 318) mit einem offenen Ende aufweist, und der Abschlussbereich (118, 318) ein Außenprofil aufweist, das sich in Breite zu dem offenen Ende nach unten verjüngt.

4. Galvanisierungsgestell nach einem vorstehenden Anspruch, wobei das Gestell (100, 300) einen Lagerklemmmechanismus (106, 306) umfasst, der konfiguriert ist, um einen Stapel von Lagerschalen (114, 314) gegen den Endträger (108, 308) mit axialen Kanten benachbarter Lagerschalen (114, 314) in Widerlager zu klemmen.

5. Galvanisierungsgestell nach einem vorstehenden Anspruch, wobei das Gestell (100) eine elektrisch isolierende Platte (102) umfasst, die einen länglichen Schlitz (112) aufweist, der sich entlang der Platte (102) erstreckt, wobei das Gestell (100) konfiguriert ist, um eine Vielzahl hohler halb zylindrischer Lagerschalen (114) zu halten, die symmetrisch entlang der isolierenden Platte (102) angeordnet sind, wobei umfängliche Endflächen (116) jeder Lagerschale die isolierende Platte (102) auf entgegengesetzten Seiten des länglichen Schlitzes (112) berühren, und wobei die Flüssigkeitsversorgungsleitung (110) konfiguriert ist, um einen Flüssigkeitsfluss in das Galvanisierungsgestell (100) zwischen konkaven inneren Flächen der Lagerschalen (114) und der isolierenden Platte (102) zu empfangen.

6. Galvanisierungsgestell nach einem der Ansprüche 1 bis 4, wobei das Galvanisierungsgestell (300) konfiguriert ist, um eine Vielzahl im Wesentlichen zylindrischer Gleitlagerschalen (314) zu halten, die entlang des Gestells (300) axial angeordnet sind, wobei der Endabschnitt (308) mit einem weiteren Endabschnitt (374) verbunden ist, und der weitere Endabschnitt (374) eine Flüssigkeitsüberlauföffnung zum Empfangen eines Flüssigkeitsflusses aus dem Galvanisierungsgestell (300) umfasst.

7. Galvanisches Bad, das ein Galvanisierungsgestell (100, 300) nach einem der vorstehenden Ansprüche umfasst, das
ein Bad (250) zum Enthalten von Galvanisierungslösung (254) umfasst, und das einen Flüssigkeitsversorgungsauslass (262) aufweist, der konfiguriert ist, um zu der Flüssigkeitsversorgungsleitung (110, 310) des Galvanisierungsgestells (100, 300) zu passen, und
eine Pumpe umfasst, die konfiguriert ist, um Galvanisierungslösung (254) durch den Flüssigkeitsversorgungsauslass (262) hinaus zu pumpen.

8. Galvanisches Bad nach Anspruch 7, wobei das galvanische Bad (250) einen Träger (256) zum Tragen des Galvanisierungsgestells (100, 300) umfasst, der eine Gestellklemme (258) zum Klemmen der Flüssigkeitsversorgungsleitung (110, 310) in den Flüssigkeitsversorgungsauslass (262) umfasst.

## Revendications

1. Râtelier d'électrodéposition pour le maintien d'une pluralité de coques de portée coulissantes (114, 314) alors qu'un revêtement est électrodéposé sur leurs surfaces intérieures concaves, comprenant :
un support d'extrémité (108, 308),
dans lequel le support d'extrémité (108, 308) comprend un conduit d'alimentation en liquide (110, 310) pour la réception d'un flux de liquide dans le râtelier d'électrodéposition (100, 300) le long des faces intérieures concaves des coques de portée (114, 314),
**caractérisé en ce que**
le support d'extrémité (108, 308) comprend une face interne (320), et le conduit d'alimentation en liquide (110, 310) présente un orifice interne qui est de niveau avec la face interne (320).

2. Râtelier d'électrodéposition selon la revendication 1, dans lequel le conduit d'alimentation en liquide (110, 310) comprend un tuyau de couplage (110, 310) qui fait saillie du support d'extrémité (108, 308), pour l'amarrage avec une sortie d'alimentation en liquide (262) d'un bain d'électrodéposition (250).

3. Râtelier d'électrodéposition selon la revendication 2, dans lequel le tuyau de couplage (110, 310) présente une zone terminale (118, 318) avec une extrémité ouverte et la zone terminale (118, 318) présente un profil externe qui s'amincit en largeur vers l'extrémité ouverte.

4. Râtelier d'électrodéposition selon l'une quelconque des revendications précédentes, dans lequel le râtelier (100, 300) comprend un mécanisme de serrage de portée (106, 306) configuré pour serrer une pile de coques de portée (114, 314) contre le support d'extrémité (108, 308), avec des arêtes axiales de coques de portée adjacentes (114, 314) en butée.

5. Râtelier d'électrodéposition selon l'une quelconque des revendications précédentes, dans lequel le râtelier (100) comprend une plaque électroisolante (102) présentant une fente allongée (112) s'étendant le long de la plaque (102), dans lequel le râtelier (100) est configuré pour maintenir une pluralité de coques de portée coulissantes semi-cylindriques creuses (114) agencées symétriquement le long de la plaque isolante (102) avec des faces d'extrémité circonférentielles (116) de chaque coque de portée touchant la plaque isolante (102) sur des côtés opposés de la fente allongée (112), et dans lequel le conduit d'alimentation en liquide (110) est configuré pour la réception d'un flux de liquide dans le râtelier d'électrodéposition (100) entre des faces intérieures concaves des coques de portée (114) et la plaque isolante (102).

6. Râtelier d'électrodéposition selon l'une quelconque des revendications 1 à 4, dans lequel le râtelier d'électrodéposition (300) est configuré pour maintenir une pluralité de coques de portée coulissantes sensiblement cylindriques (314) agencées axialement le long du râtelier (300), dans lequel la section d'extrémité (308) est raccordée à une autre section d'extrémité (374), et l'autre section d'extrémité (374) comprend une ouverture de débordement liquide pour la réception d'un flux de liquide hors du râtelier d'électrodéposition (300).

7. Bain d'électrodéposition comprenant un râtelier d'électrodéposition (100, 300) selon l'une quelconque des revendications précédentes, comprenant
un bain (250) pour contenir une solution d'électrodéposition (254) et présentant une sortie d'alimentation en liquide (262) configurée pour s'accoupler avec le conduit d'alimentation en liquide (110, 310) du râtelier (100, 300), et
une pompe configurée pour pomper une solution d'électrodéposition (254) au travers de la sortie d'alimentation en liquide (262).

8. Bain d'électrodéposition selon la revendication 7, dans lequel le bain d'électrodéposition (250) comprend un support (256) pour le support du râtelier d'électrodéposition (100, 300) qui comprend une pince de râtelier (258), pour le serrage du conduit d'alimentation en liquide (110, 310) dans la sortie d'alimentation en liquide (262).
